# EUROPEAN PATENT APPLICATION

(11) **EP 4 782 368 A1**
(43) Date of publication of application: **29.07.2026**
(21) Application number: 26154350.8
(22) Date of filing: 27.01.2026
(51) Int. Cl.: B65G 1/04, B65G 47/38, B65G 65/00, B65G 1/137

(54) **MOBILE ROBOTIC SYSTEM AND METHOD FOR SORTATION USING THEREOF**

(30) Priority: 27.01.2025 IN 202511006704
(71) Applicant: Addverb Technologies Limited, Uttar Pradesh 201310 (IN)
(72) Inventor: Mohan, K V N B Sai Krishna, 201310 Noida, Uttar Pradesh (IN); Sharma, Binay Kumar, 201310 Noida, Uttar Pradesh (IN); Aurvay, Sylvain Gerard Bernard, 201310 Noida, Uttar Pradesh (IN); Gopalakrisnan, Bharath, 201310 Noida, Uttar Pradesh (IN); Goel, Divyanshu, 201310 Noida, Uttar Pradesh (IN)
(74) Representative: Dr. Solf & Zapf Patent- und Rechtsanwalts PartG mbB

(57) **Abstract**

A mobile robotic system and a method for autonomous handling and sortation of parcels using thereof are described. The mobile robotic system includes an automated guided vehicle (AGV), a plurality of independently actuatable lifting units mounted on the AGV to receive and transport at least one parcel, and at least one motor operatively coupled to the lifting units and configured to actuate the lifting units to facilitate parcel discharge. The plurality of independently actuatable lifting units are arranged to enable selective parcel discharge at designated destination points. The mobile robotic system also includes a controller configured to receive parcel data, map parcels to specific lifting units, generate a sortation sequence, and control actuation of the lifting units. The mobile robotic system eliminates the need for fixed infrastructure while maintaining accurate parcel delivery through coordinated rotation and discharge operations.

## Description

### FIELD OF THE PRESENT DISCLOSURE

The present disclosure relates generally to automated material handling and sortation systems, and more particularly to automated guided vehicles configured for efficient parcel sortation operations. Specifically, the present disclosure pertains to mobile robotic systems that can handle multiple parcels simultaneously for sortation to different destinations.

### BACKGROUND

Modern logistics and distribution operations frequently employ automated material handling systems for efficient movement and sortation of parcels, packages, and other items. These systems are deployed across various environments including warehouses, fulfilment centres, and distribution facilities to streamline order processing and delivery operations by sorting the articles/parcels/items that come from various locations in the warehouse and dispensing the sorted articles/parcels to the destination bin. Such automated material handling systems have become increasingly important as e-commerce continues to expand globally, creating unprecedented demand for rapid and accurate order fulfilment.

Conventional parcel handling systems often rely on fixed infrastructure such as conveyor belts, slides, and chutes to transport and sort items. While such fixed systems can process high volumes of parcels, these equipment are costly, require significant facility modifications, occupy substantial floor space, and lack the flexibility to adapt to changing operational requirements. Additionally, these systems typically follow predetermined routes and sortation patterns, limiting their ability to optimize workflows dynamically.

Some attempts have been made to address these limitations have included the development of mobile robots and automated guided vehicles (AGVs) equipped with basic carrying capabilities. These systems typically incorporate single-purpose designs that can transport items between fixed points and offer limited sortation functionality. Some implementations have explored mobile platforms for sortation, but these solutions have not adequately addressed the challenges of sequential order processing and efficient multi-destination sortation. Existing mobile sortation solutions often struggle with several technical constraints. These include limited payload capacity, inability to handle parcels simultaneously, lack of intelligent mapping between pickup and delivery points, and inefficient use of transport resources. Furthermore, current systems generally cannot maintain sequential ordering of parcels while executing complex sortation patterns across multiple destinations.

Therefore, there exists a need for improved automated material handling systems that can combine the flexibility of mobile platforms with advanced parcel sortation capabilities while maintaining control over sequencing of parcels and delivery operations.

### SUMMARY

The present disclosure relates to a mobile robotic system comprising an automated guided vehicle (AGV) having a lifting mechanism configured to receive at least one parcel from the pick position and transport/dispense said at least one parcel to the destination bin. The lifting mechanism comprises one or more lifting units in the form of a conveyor, tilt tray, vacuum based picking grippers or other similar lifting mechanism to retrieve or dispense the parcel. The mobile robotic system further comprises at least one motor to actuate the lifting unit of the lifting mechanism. The lifting mechanism is synchronized to prevent mechanical interference between adjacent lifting units during actuation. The lifting unit is configured to rotate through a predefined angular range to ensure reliable parcel delivery. The mobile robotic system provides a flexible and efficient solution for automated material handling through its integration of autonomous navigation capabilities with advanced sortation functionality. The implementation of independently actuatable lifting units mounted on the AGV enables the system to receive, transport, and selectively discharge multiple parcels according to predetermined sortation requirements, thereby enhancing operational efficiency while maintaining precise control over individual parcel handling operations.

In an embodiment, the plurality of independently actuatable lifting units comprises a plurality of tilt trays, and wherein the at least one motor comprises a plurality of tilt motors, each tilt motor of the plurality of tilt motors being operatively coupled to a respective tilt tray of the plurality of tilt trays. This configuration enables independent control over each tilt tray, allowing for selective actuation based on specific sortation requirements. The independent control mechanism ensures precise parcel discharge operations at designated destination points while maintaining system stability and operational efficiency through the coordinated interaction between the plurality of tilt trays and their respective tilt motors.

In certain implementations, the plurality of independently actuatable lifting units comprises at least two tilt trays arranged in a sequential arrangement, wherein each tilt tray is configured to receive a parcel at a single pickup location or at multiple pickup locations, and wherein each tilt tray is independently actuatable to discharge its respective parcel at a designated destination point. The sequential arrangement of the lifting units facilitates orderly parcel reception and discharge operations, enabling the mobile robotic system to maintain precise control over parcel sequencing throughout the sortation process. This configuration supports complex sortation patterns by allowing the system to execute targeted discharge operations at specific destination points according to predetermined sortation requirements.

The mobile robotic system may further comprise a central support frame mounted on the AGV, wherein the plurality of independently actuatable lifting units are mounted to the central support frame, and the central support frame includes motor mounting points for securing the at least one motor. The central support frame provides structural integrity to the overall assembly, maintaining proper alignment between the lifting units and their respective motors during both movement and actuation operations. The inclusion of dedicated motor mounting points ensures stable motor placement, facilitating consistent actuation performance while minimizing mechanical stress on system components.

In various embodiments, the mobile robotic system incorporates a modular mounting system enabling removal and replacement of individual lifting units, addition of supplementary lifting units, and reconfiguration of lifting unit positions. This modular approach enhances system adaptability by allowing for customization based on specific operational requirements. The ability to reconfigure lifting unit positions and quantities provides operational flexibility, enabling the mobile robotic system to accommodate varying parcel characteristics and sortation patterns across different application environments.

Additional aspects include configurations where the plurality of independently actuatable lifting units are arranged in a parallel configuration on the AGV, each lifting unit is dimensioned to accommodate different parcel sizes, and adjacent lifting units maintain sufficient spacing to prevent interference during independent actuation. The parallel arrangement with appropriate spacing ensures operational reliability by preventing mechanical interference during actuation sequences, while the dimensional customization of lifting units enables efficient handling of diverse parcel types commonly encountered in modern logistics operations.

The mobile robotic system may further comprise a controller configured to receive parcel data corresponding to multiple parcels, map each parcel to a specific lifting unit of the plurality of independently actuatable lifting units in a sequential order, generate a sortation sequence for the multiple parcels based on the sequential order, and control the at least one motor to actuate specific lifting units according to the sortation sequence. This control functionality enables the mobile robotic system to execute complex sortation patterns through coordinated actuation of specific lifting units according to predetermined sequencing requirements, thereby enhancing operational efficiency while maintaining precise control over individual parcel handling operations.

In certain implementations, the controller is further configured to autonomously navigate the AGV between at least one pickup location for receiving one or more parcels on selected one or more lifting units and at least one delivery location for discharging one or more parcels through selective actuation of one or more lifting units. The autonomous navigation capability enables the mobile robotic system to execute complete material handling sequences, from initial parcel acquisition through final sortation and delivery, while maintaining accurate positioning throughout operational cycles, thereby enhancing system efficiency while reducing manual intervention requirements.

In certain implementations, the controller is further configured to verify successful parcel discharge through position monitoring of one or more lifting units, implement a mapping system associating parcels with specific lifting unit and intended destination points, and generate status updates indicating completion of parcel sortation operations.

The present disclosure also relates to a method for autonomous parcel handling and sortation, comprising receiving, by a plurality of independently actuatable lifting units mounted on an automated guided vehicle (AGV), one or more parcels, wherein each lifting unit is configured to receive and transport at least one parcel, navigating the AGV between at least one pickup location and multiple delivery locations, generating a sortation sequence for the multiple parcels, and selectively actuating the plurality of independently actuatable lifting units according to the sortation sequence to discharge parcels at designated destination points. This approach provides a systematic framework for executing complex sortation operations through coordinated interaction between the AGV navigation system and the independently actuatable lifting units, thereby enhancing operational efficiency while maintaining precise control over individual parcel handling operations throughout the sortation process.

### BRIEF DESCRIPTION OF THE FIGURES

For a more complete understanding of example embodiments of the present disclosure, reference is now made to the following descriptions taken in connection with the accompanying drawings in which:
FIG. 1 illustrates a front elevation view of a mobile robotic system comprising an automated guided vehicle (AGV), a plurality of independently actuatable tilt trays, and a plurality of tilt motors, with the tilt trays shown in an undeployed configuration for parcel reception operations, in accordance with one or more exemplary embodiments of the present disclosure;
FIG. 2 illustrates a rear elevation view of the mobile robotic system of FIG. 1, in accordance with one or more exemplary embodiments of the present disclosure;
FIG. 3 illustrates a first side elevation view of the mobile robotic system of FIG. 1, in accordance with one or more exemplary embodiments of the present disclosure;
FIG. 4 illustrates a second side elevation view of the mobile robotic system of FIG. 1, in accordance with one or more exemplary embodiments of the present disclosure;
FIG. 5 illustrates a top plan view of the mobile robotic system of FIG. 1, in accordance with one or more exemplary embodiments of the present disclosure;
FIG. 6 illustrates a bottom plan view of the mobile robotic system of FIG. 1, in accordance with one or more exemplary embodiments of the present disclosure;
FIG. 7 illustrates a front elevation view of the mobile robotic system with the plurality of independently actuatable tilt trays shown in a deployed configuration for parcel discharge operations, in accordance with one or more exemplary embodiments of the present disclosure;
FIG. 8 illustrates a rear elevation view of the mobile robotic system of FIG. 7, in accordance with one or more exemplary embodiments of the present disclosure;
FIG. 9 illustrates a first side elevation view of the mobile robotic system of FIG. 7, in accordance with one or more exemplary embodiments of the present disclosure;
FIG. 10 illustrates a second side elevation view of the mobile robotic system of FIG. 7, in accordance with one or more exemplary embodiments of the present disclosure.
FIG. 11 illustrates a partially exploded front perspective view of the mobile robotic system with the tilt trays shown separated from the AGV, in accordance with one or more exemplary embodiments of the present disclosure;
FIG. 12 illustrates a partially exploded rear perspective view of the mobile robotic system with the tilt trays shown separated from the AGV, in accordance with one or more exemplary embodiments of the present disclosure; and
FIG. 13 illustrates a flowchart depicting a method for autonomous parcel handling and sortation using the mobile robotic system, in accordance with one or more exemplary embodiments of the present disclosure.

### DETAILED DESCRIPTION

In the following description, for purposes of explanation, numerous specific details are set forth in order to provide a thorough understanding of the present disclosure. It will be apparent, however, to one skilled in the art that the present disclosure is not limited to these specific details.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

Aspects of this disclosure are directed to a mobile robotic system configured for autonomous parcel handling and sortation operations in material handling environments. For the purpose of this disclosure, the term "mobile robotic system" refers to an integrated assembly of mechanical, electrical, and control components configured to execute autonomous material handling operations, specifically focused on parcel sortation functionality. The term "parcel" encompasses any discrete item suitable for automated handling, including but not limited to packages, boxes, envelopes, containers, and other articles commonly processed in logistics and distribution operations. The term "actuate" or "actuation" refers to the controlled mechanical movement of a lifting unit to facilitate parcel discharge operations. Further, the term "sortation" refers to the process of directing parcels to specific destination points based on predetermined criteria.

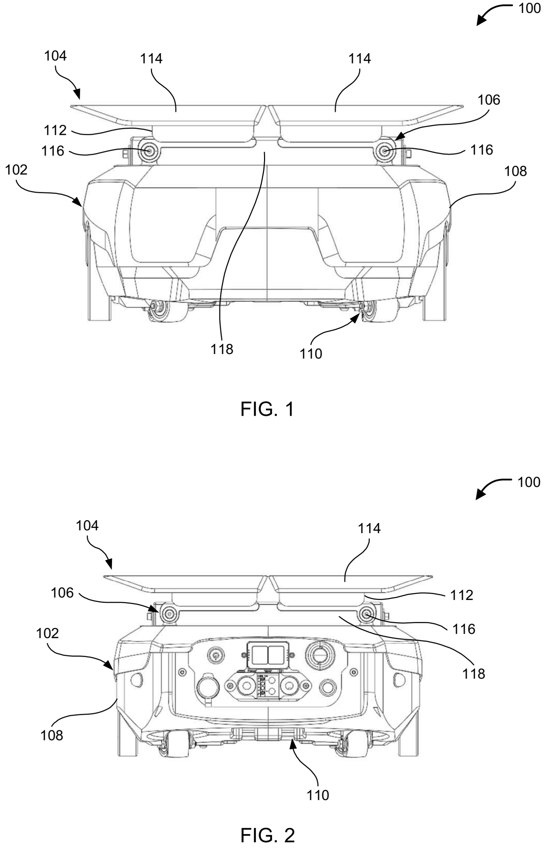

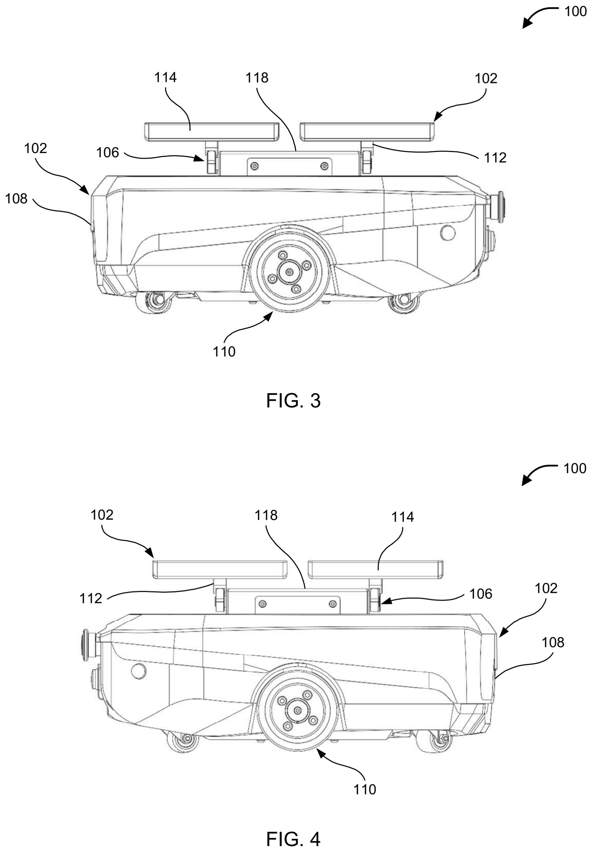

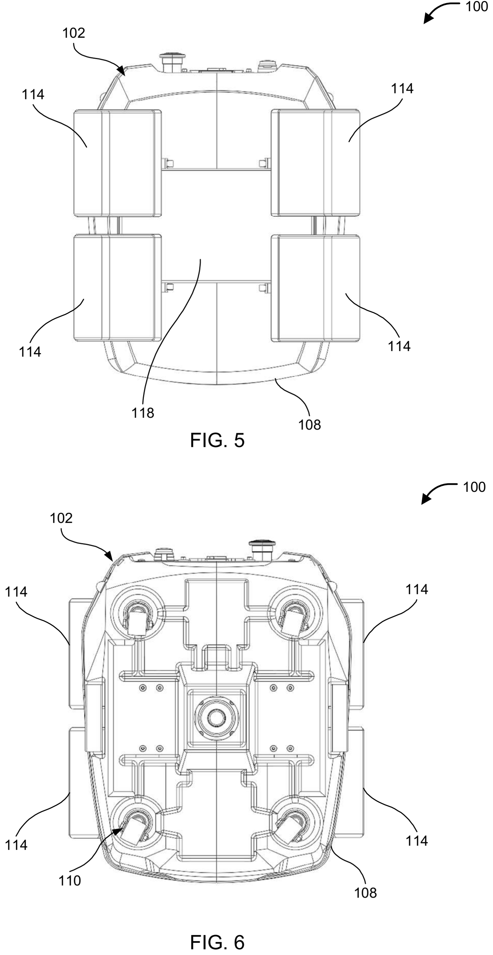

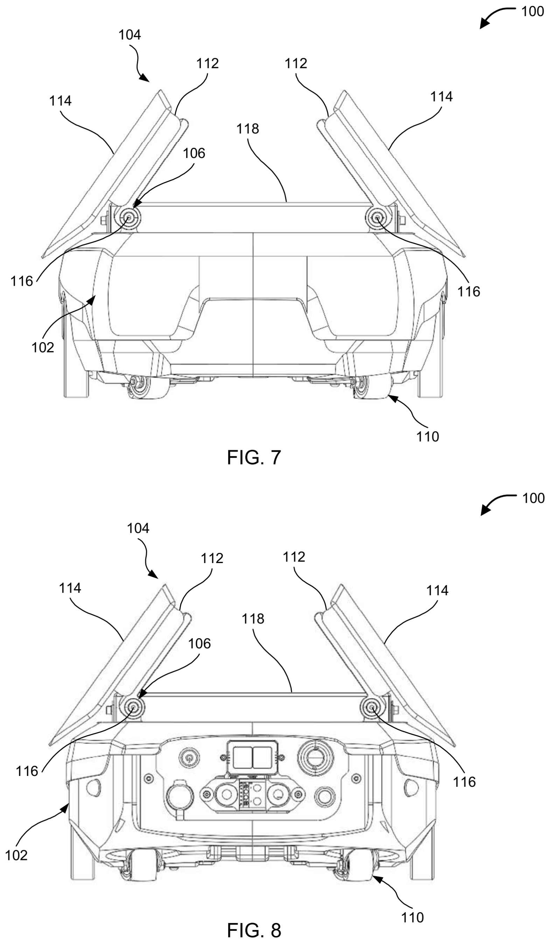

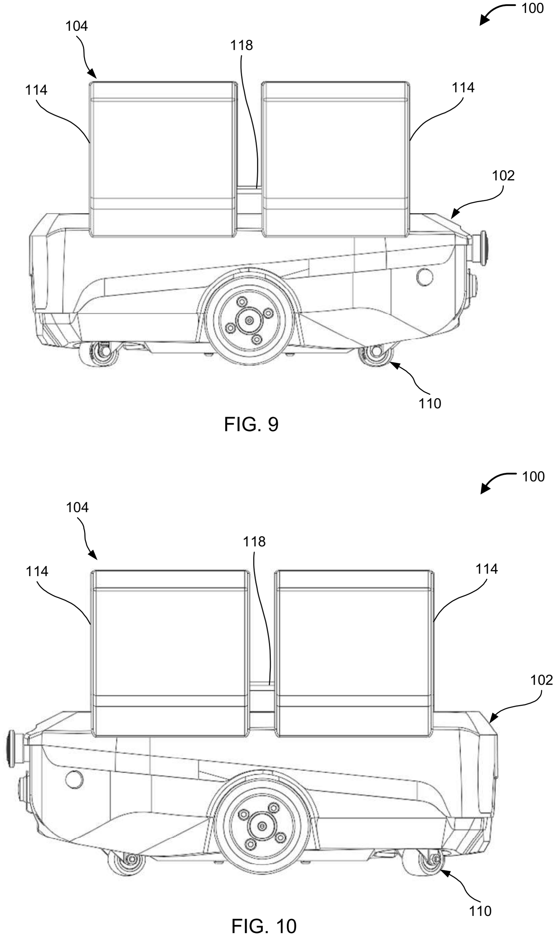

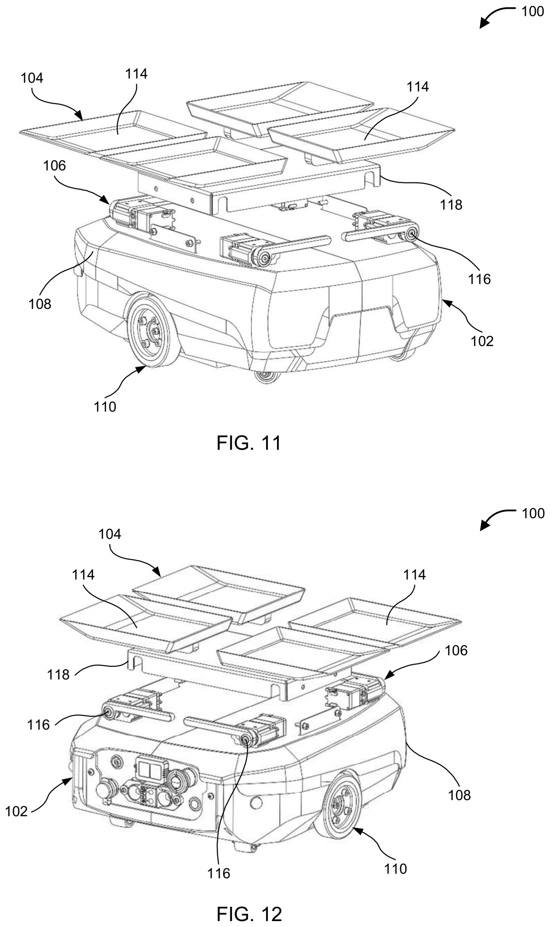

Referring to FIGS. 1-12, in combination, illustrated are different views of a mobile robotic system 100, in accordance with one or more exemplary embodiments of the present disclosure. The mobile robotic system 100 of the present disclosure is configured for automated material handling through its integration of multiple subsystems, which are designed to work in coordination with each other for optimized parcel processing operations. The mobile robotic system 100 incorporates mechanical frameworks, actuation mechanisms, and control systems that enable autonomous navigation, multi-point parcel acquisition, and targeted discharge operations. The mobile robotic system 100 addresses material handling challenges through its ability to simultaneously manage multiple parcels while maintaining accurate control over individual item sortation sequences. The mobile robotic system 100 of the present disclosure may have applications spanning diverse industrial sectors, including e-commerce fulfilment, retail distribution, postal operations, and manufacturing logistics. The mobile robotic system 100 provides functionality that combines the flexibility of mobile platforms with advanced parcel sortation capabilities while maintaining control over sequencing of parcels and delivery operations.

As illustrated in the accompanied drawings, the mobile robotic system 100 (hereinafter, sometimes, simply referred to as "system") includes an automated guided vehicle (AGV) 102, a plurality of independently actuatable lifting units 104 mounted on the AGV 102, and at least one motor 106 operatively coupled to the plurality of independently actuatable lifting units 104. The mobile robotic system 100 enables simultaneous sortation and delivery of multiple parcels by providing navigation capabilities via the AGV 102 and through independent control of each lifting unit 104 by corresponding one of the at least one motor 106. The proposed configuration enables the mobile robotic system 100 to provide scalable implementations across various operational environments, from small distribution centres to large logistics facilities. In particular, herein, the AGV 102 serves as the mobile foundation of the mobile robotic system 100, providing autonomous navigation capabilities and structural support for the integrated parcel handling mechanisms. The plurality of independently actuatable lifting units 104 constitutes the primary parcel manipulation subsystem of the mobile robotic system 100, with each lifting unit 104 being designed to receive, transport, and discharge individual parcels through controlled actuation. The at least one motor 106 provides the mechanical force necessary for actuating the lifting units 104, enabling precise control over parcel discharge operations at designated destination points.

The mobile robotic system 100 is configured to execute automated material handling operations through coordinated interaction between these components, i.e., the AGV 102, the plurality of independently actuatable lifting units 104, and the at least one motor 106. Each lifting unit 104 of the plurality of independently actuatable lifting units 104 is configured to receive and transport at least one parcel. The at least one motor 106 is configured to actuate the lifting units 104 to facilitate parcel discharge. The plurality of independently actuatable lifting units 104 are arranged to enable selective parcel discharge at designated destination points. The plurality of independently actuatable lifting units 104 provides the mobile robotic system 100 with the ability to handle multiple parcels simultaneously, while the selective actuation capability enables precise control over individual parcel discharge operations at specific destination points. This configuration represents the architecture of the mobile robotic system 100, integrating mobility, parcel handling, and targeted discharge capabilities within a unified platform. The proposed integrated approach eliminates the need for fixed sortation infrastructure while maintaining the operational capabilities required for complex material handling scenarios in logistics and distribution environments.

As discussed, in the present configurations, the AGV 102 serves as the mobile platform for the mobile robotic system 100. The AGV 102 is configured to provide autonomous navigation capabilities between various operational positions. The AGV 102 includes a main chassis 108 configured with drive mechanisms 110 for controlled movement across the given facility. The structural framework provided by the main chassis 108 of the AGV 102 is configured to support the mechanical loads imposed by the plurality of independently actuatable lifting units 104 and associated mechanisms while maintaining stable operation during movement. The AGV 102 may incorporate navigation sensors and control interfaces that enable accurate positioning during parcel pickup and discharge operations. The autonomous navigation capabilities of the AGV 102 enable the mobile robotic system 100 to execute complex movement patterns between pickup and delivery locations without manual intervention. The integration of sensing and control technologies within the AGV 102 ensures precise positioning during operations, such as parcel reception and discharge, enhancing system reliability while minimizing operational errors. The structural design of the main chassis 108 incorporates load-bearing elements engineered to support the mechanical stresses associated with the mounted lifting units 104 and their actuation sequences, ensuring system stability throughout operational cycles.

For purposes of the present disclosure, the lifting units 104 and associated at least one motor 106 may be implemented in various configurations; however, the scope of the mobile robotic system 100 is not limited to any specific implementation. The lifting units 104 may encompass various mechanical configurations capable of controlled parcel discharge operations, including but not limited to: tilt trays, rotatable platforms, sliding mechanisms, multi-segment articulated platforms, belt-driven discharge surfaces, pneumatically actuated discharge mechanisms, or combinations thereof. Correspondingly, the at least one motor 106 may comprise different drive mechanisms suited to the specific lifting unit 104 configuration, such as electric motors, linear actuators, servo mechanisms, stepper motors, hydraulic systems, pneumatic actuators, or other electromechanical drive configurations, while maintaining the fundamental capability of independent actuation for controlled parcel discharge. This flexible approach to implementing the lifting units 104 and the at least one motor 106 enables the mobile robotic system 100 to be adapted for diverse operational requirements while maintaining the core functionality of independent parcel handling and targeted discharge. The modular design underlying the system architecture supports customization based on specific application requirements, parcel characteristics, and operational constraints, thereby enhancing the versatility and adaptability of the mobile robotic system 100 across various implementation scenarios.

Further, herein, the plurality of independently actuatable lifting units 104 are mounted on the AGV 102, with each lifting unit 104 configured to receive and transport at least one parcel. The lifting units 104 include support platforms 112 that define parcel receiving surfaces 114 dimensioned to accommodate standardized parcel sizes. Each lifting unit 104 includes mounting brackets 116 positioned on opposing sides of the support platform 112, facilitating mechanical integration with other system components. The arrangement of the lifting units 104 enables coordinated multi-parcel handling while maintaining sufficient spacing to prevent interference during actuation operations. The support platforms 112 provide stable surfaces for parcel placement, with their dimensions adapted to accommodate standard parcel sizes commonly encountered in logistics operations. Herein, the parcel receiving surfaces 114 may incorporate materials or textures designed to optimize friction characteristics for stable parcel retention during transport while facilitating smooth discharge during actuation sequences. The mounting brackets 116 establish secure mechanical connections between the lifting units 104 and the broader system structure, ensuring proper alignment and stability throughout operational cycles while facilitating maintenance and reconfiguration operations when required.

In present embodiments, the plurality of independently actuatable lifting units 104 comprises at least two lifting units 104 arranged in a sequential arrangement on the AGV 102. In the illustrated embodiments, the mobile robotic system 100 is shown to include four lifting units 104. This configuration enables the mobile robotic system 100 to handle multiple parcels simultaneously, with each lifting unit 104 capable of receiving a parcel at a single pickup location or at multiple pickup locations. Each lifting unit 104 maintains independent actuation capability, allowing discharge of the respective parcel at a designated destination point without interfering with adjacent lifting units 104 or their operations. As discussed, each lifting unit 104 of the plurality of independently actuatable lifting units 104 incorporates the support platform 112 that defines the parcel receiving surface 114. The support platform 112 connects to at least two mounting brackets 116 positioned on opposing sides. A rotatable shaft may couple to the mounting brackets 116 and defines the axis of rotation for the lifting unit 104. Such mechanical coupling between the rotatable shaft and the respective motor 106 enables controlled angular displacement of the lifting unit 104 during discharge operations.

Further, in the mobile robotic system 100, the at least one motor 106 is operatively coupled to the plurality of independently actuatable lifting units 104, with each motor 106 configured to control a respective lifting unit 104. Each motor 106 connects to its associated lifting unit 104 through a mechanical coupling that converts motor rotation into controlled angular displacement of the lifting unit 104. The at least one motor 106 may be mounted to motor mounting points integrated into the main chassis 108 of the AGV 102, ensuring stable operation during actuation sequences. The arrangement of the at least one motor 106 enables control over each lifting unit 104, facilitating selective parcel discharge operations at designated destination points. The mechanical coupling between each motor 106 and its associated lifting unit 104 is designed to optimize power transfer while minimizing mechanical backlash, ensuring precise actuation control throughout the operational range. The mounting configuration stabilizes the motors 106 during both transport and actuation operations, preventing unwanted vibration or displacement that could affect actuation precision. The power specifications for the motors 106 are calibrated to provide sufficient torque for reliable actuation under various loading conditions while maintaining energy efficiency, optimizing system performance across diverse operational scenarios.

The proposed mechanical configuration for each lifting unit 104 establishes the structural and functional foundations for its operation. The support platform 112 provides the primary load-bearing surface for parcel reception and transport, with its dimensions and material properties optimized for the intended application environment. The mounting brackets 116 establish secure mechanical connections between the support platform 112 and the rotatable shaft, ensuring structural integrity during both transport and actuation operations. The rotatable shaft defines the primary axis of rotation for the lifting unit 104, with its mechanical properties engineered to withstand the torsional forces associated with parcel discharge operations. The mechanical coupling between the rotatable shaft and the respective motor 106 establishes the power transmission pathway that enables controlled actuation, with its design optimized to maximize efficiency while minimizing mechanical play or backlash. The integrated design of these components ensures reliable operation of the mobile robotic system 100, with each element contributing to the overall functional performance of the lifting unit 104.

In one or more embodiments, the plurality of independently actuatable lifting units 104 comprises at least one of: tilt trays, conveyors, vacuum-based picking grippers, rotatable platforms, sliding mechanisms, multi-segment articulated platforms, belt-driven discharge surfaces, or pneumatically actuated discharge mechanisms. Each implementation option offers specific advantages for particular operational scenarios, enabling system optimization based on the specific characteristics of the parcels being handled and the discharge operations being executed. The tilt tray configuration provides reliable gravity-assisted discharge for standard parcels, while conveyor implementations offer controlled linear transfer capabilities for specific applications. Vacuum-based picking grippers provide secure handling for irregular or fragile items, while rotatable platforms enable multidirectional discharge operations. Sliding mechanisms offer space-efficient linear discharge capabilities, while multi-segment articulated platforms provide enhanced control over complex discharge patterns. Belt-driven discharge surfaces ensure gentle handling of delicate items, while pneumatically actuated mechanisms provide rapid actuation for high-throughput applications. This range of implementation options enables adaptation of the mobile robotic system 100 to specific operational requirements based on parcel characteristics and sortation needs.

Further, the at least one motor 106 comprises at least one of: electric motors, linear actuators, servo mechanisms, stepper motors, hydraulic systems, or pneumatic actuators. This range of motor 106 options enables tailored implementation based on specific operational requirements, environmental constraints, and performance parameters. Electric motors provide reliable operation with precise control capabilities, making them suitable for most standard applications. Linear actuators offer direct linear force application for specific lifting unit 104 designs requiring translational rather than rotational motion. Servo mechanisms provide enhanced position control for applications requiring precise placement or variable speed operations. Stepper motors enable exact incremental positioning for applications requiring discrete actuation steps. Hydraulic systems offer high force capabilities for heavy-duty applications, while pneumatic actuators provide rapid actuation for high-cycle operations in compatible environments. The selection of specific motor 106 for a particular implementation considers various factors, including power requirements, control precision, environmental conditions, maintenance accessibility, and system integration requirements, ensuring that the mobile robotic system 100 can be optimized for specific operational scenarios while maintaining core functionality across diverse implementation environments.

In an example implementation, the plurality of independently actuatable lifting units 104 comprises a plurality of tilt trays, and the at least one motor 106 comprises a plurality of tilt motors, with each tilt motor of the plurality of tilt motors being operatively coupled to a respective tilt tray of the plurality of tilt trays. This specific implementation of the lifting units 104 as tilt trays represents an effective configuration for precise parcel handling and targeted discharge operations. The dedicated coupling between each tilt tray and its respective tilt motor enables independent control over individual tray actuation, allowing for selective parcel discharge based on specific sortation requirements. This one-to-one relationship between tilt trays and tilt motors ensures mechanical control while minimizing system complexity, thereby enhancing operational reliability while maintaining the flexibility required for complex sortation operations. The tilt tray configuration provides a mechanically efficient means of parcel discharge through controlled angular displacement, utilizing gravitational assistance to facilitate parcel movement toward the designated discharge point. The implementation of multiple tilt trays within a single mobile robotic system 100 enables simultaneous handling of multiple parcels while maintaining independent control over individual discharge operations, enhancing system throughput while ensuring accurate sortation.

Each tilt motor of the plurality of tilt motors is configured to rotate its respective tilt tray about an axis to facilitate parcel discharge. This rotational mechanism represents the fundamental actuation principle for parcel discharge operations in the tilt tray configuration. The controlled rotation of each tilt tray about its axis enables precise parcel discharge through gravitational assistance, wherein the angular displacement of the tray surface induces controlled parcel movement toward the designated discharge point. The rotational range is calibrated to ensure reliable parcel discharge while maintaining system stability throughout the actuation sequence. The axis of rotation is positioned to optimize the mechanical advantage during actuation while minimizing the power requirements for the tilt motors. The rotation creates an inclined surface that provides a controlled gravity-assisted path for the parcel to move from the tilt tray to the designated discharge location. The rotational motion is executed at a controlled rate to ensure smooth parcel transfer while preventing damage or displacement that could affect delivery accuracy.

In an example configuration, the plurality of tilt trays comprises at least two tilt trays arranged in a sequential arrangement, wherein each tilt tray is configured to receive a parcel at a single pickup location or at multiple pickup locations. This sequential arrangement of tilt trays establishes a defined spatial relationship between adjacent units, enabling structured parcel reception and discharge operations. The configuration supports multi-parcel handling by providing dedicated reception surfaces for individual parcels, with each tray positioned to optimize space utilization while maintaining operational clearance. The ability to receive parcels at either single or multiple pickup locations enhances system flexibility, enabling adaptation to various facility layouts and operational workflows. The sequential arrangement facilitates structured loading sequences, wherein parcels can be systematically placed on specific trays according to predetermined sortation requirements, establishing the foundation for subsequent targeted discharge operations at designated destination points. The ability to receive parcels from multiple pickup locations enhances operational flexibility, allowing the mobile robotic system 100 to integrate with various upstream processing systems or material handling interfaces within the facility environment.

Each tilt tray is independently actuatable to discharge its respective parcel at a designated destination point. This independent actuation capability represents a functional attribute of the mobile robotic system 100, enabling selective parcel discharge according to specific sortation requirements. Each tilt tray maintains mechanical independence from adjacent units, allowing for targeted actuation without affecting the status of other parcels within the system. This selective discharge capability enables the mobile robotic system 100 to execute complex sortation patterns by releasing specific parcels at designated locations while retaining others for subsequent discharge operations. The independent actuation mechanism incorporates control elements that ensure precise timing and positioning during discharge sequences, optimizing delivery accuracy while minimizing operational disruptions. The ability to selectively discharge specific parcels at designated locations enhances sortation efficiency by enabling targeted delivery operations without requiring complete system reconfiguration between discharge sequences.

The mobile robotic system 100 further comprises a central support frame 118 mounted on the AGV 102. The plurality of independently actuatable lifting units 104 are mounted to the central support frame 118. The central support frame 118 includes motor mounting points for securing the at least one motor 106. The central support frame 118 provides structural integrity during both transport and actuation operations, maintaining proper alignment between the lifting units 104 and their associated motors 106. The central support frame 118 represents a structural component that establishes the mechanical integration between the AGV 102 and the parcel handling subsystems. The frame design incorporates load-bearing elements engineered to withstand the mechanical stresses associated with both transport and actuation operations, ensuring system stability throughout operational cycles. The mounting interfaces between the central support frame 118 and lifting units 104 maintain precise alignment during all operational states, optimizing actuation performance while minimizing mechanical wear. The motor mounting points are positioned to optimize power transmission efficiency while maintaining proper spatial relationships between drive components, ensuring reliable actuation performance throughout the system operational life. The central support frame 118 also provides a standardized mounting interface that facilitates system assembly, maintenance, and reconfiguration operations when required.

Herein, as discussed, the plurality of independently actuatable lifting units 104 are mounted to the central support frame 118 in a sequential arrangement. The central support frame 118 incorporates designated motor mounting points for securing the at least one motor 106 in proper alignment with their respective lifting units 104. The central support frame 118 helps to maintain structural integrity during simultaneous actuation of multiple lifting units 104, ensuring stable and reliable operation of the mobile robotic system 100. The central support frame 118 provides the primary structural foundation for integrating the lifting units 104 with the AGV 102 platform, establishing a unified mechanical assembly while maintaining precise component alignment. The central support frame 118 incorporates engineered mounting interfaces that ensure secure attachment of the lifting units 104 while maintaining proper spatial relationships between adjacent units 104. The inclusion of dedicated motor mounting points within the central support frame 118 ensures consistent positioning of the motors 106 relative to their associated lifting units 104, optimizing power transmission efficiency while minimizing mechanical stress during actuation sequences. The central support frame 118 is designed to withstand the combined mechanical loads associated with normal operations, including the static weight of mounted components, dynamic forces during AGV 102 movement, and actuation forces during discharge operations.

In one or more embodiments, the plurality of independently actuatable lifting units 104 are arranged in a parallel configuration on the AGV 102. Each lifting unit 104 is dimensioned to accommodate different parcel sizes. Adjacent lifting units 104 maintain sufficient spacing to prevent interference during independent actuation. This parallel configuration establishes a specific spatial relationship between lifting units 104 that optimizes system compactness while maintaining operational clearance between adjacent components. The dimensional customization of individual lifting units 104 enables targeted adaptation to specific parcel characteristics, with each unit 104 optimized for particular size ranges commonly encountered in the intended application environment. The maintenance of sufficient spacing between adjacent units 104 represents a design consideration that ensures operational reliability by preventing mechanical interference during actuation sequences. This spacing is calculated based on the maximum displacement paths of adjacent units 104 during their respective actuation cycles, ensuring clearance throughout the full range of motion while minimizing overall system dimensions. The parallel arrangement facilitates efficient use of available space on the AGV 102 platform while ensuring independent actuation capability for each lifting unit 104, enhancing system versatility across diverse sortation applications.

Further, the lifting units 104 may be configured with different dimensional specifications to accommodate varying parcel size requirements. The modular mounting system enables integration of lifting units 104 with different length and width dimensions while maintaining standardized mounting interfaces with the central support frame 118. The lifting units 104 may be sized according to predetermined dimensional requirements, each optimized for specific parcel size ranges while preserving compatibility with the motors 106 and associated actuation mechanisms. The spacing between adjacent lifting units 104 of different sizes is maintained through standardized mounting points on the central support frame 118, ensuring clearance during actuation sequences regardless of unit 104 dimensions. The dimensional customization may extend to various lifting unit 104 parameters, including platform surface area, edge containment features, and load capacity, enabling optimization for specific parcel categories commonly encountered in the intended application environment. The standardized mounting interfaces maintain consistent mechanical relationships between lifting units 104 and the central support frame 118 regardless of dimensional variations, ensuring proper alignment and operational clearance throughout the system. The ability to integrate lifting units 104 of different dimensions within a single system enhances operational versatility by enabling simultaneous handling of diverse parcel types while maintaining the fundamental capabilities of independent actuation and targeted discharge.

In example of tilt motor configuration, each tilt motor of the plurality of tilt motors is configured to rotate its respective tilt tray through a predefined angular range to facilitate parcel discharge. The plurality of tilt motors are synchronized to prevent mechanical interference between adjacent tilt trays during actuation. This predefined angular range represents a calibrated actuation parameter that ensures reliable parcel discharge while maintaining system stability. This range is determined based on various factors including parcel characteristics, discharge target configurations, and system mechanical constraints, with the specific values optimized for the intended application environment. The synchronization between tilt motors establishes coordinated operation during multi-tray actuation sequences, preventing mechanical collisions or interference that could compromise system reliability. This synchronization may be implemented through both mechanical design elements and control system algorithms, ensuring consistent operational coordination regardless of actuation patterns or sequences. The controlled rotation creates precisely inclined surfaces that direct parcels toward their designated discharge points through gravitational assistance, ensuring accurate delivery while minimizing the potential for parcel damage or misrouting during the discharge process.

In the mobile robotic system 100, each motor 106 rotates the respective lifting unit 104 through a predefined angular range configured to ensure reliable parcel discharge at destination points. The at least one motor 106 maintains synchronized operation to prevent mechanical interference between adjacent lifting units 104 during actuation sequences. This coordination enables controlled discharge operations while maintaining system stability and operational efficiency. Herein, as discussed, the plurality of independently actuatable lifting units 104 are arranged in a parallel configuration on the AGV 102. Each lifting unit 104 is dimensioned according to standardized specifications to accommodate defined parcel sizes. The parallel arrangement maintains measured spacing between adjacent lifting units 104, preventing mechanical interference during independent actuation sequences. This configuration enables concurrent operation of multiple lifting units 104 while maintaining control over individual discharge operations. The predefined angular range for each lifting unit 104 is specifically calibrated based on various factors, including the lifting unit 104 dimensions, parcel characteristics, and discharge target configurations. This calibration ensures that the actuation motion induces controlled parcel movement toward the designated discharge point while preventing unintended displacement of other parcels within the system. The synchronization mechanisms may incorporate position sensing technologies that monitor the real-time status of each lifting unit 104, enabling dynamic adjustment of actuation parameters to maintain proper clearance between adjacent units 104 during complex discharge sequences.

In present embodiments, the mobile robotic system 100 incorporates a modular mounting system enabling removal and replacement of individual lifting units 104, addition of supplementary lifting units 104 to the sequential arrangement, and reconfiguration of lifting unit 104 positions within the sequential arrangement. This modular approach to system configuration represents an advancement over fixed-architecture designs, enabling adaptation to evolving operational requirements without complete system replacement. The modular mounting system incorporates standardized mechanical interfaces that facilitate rapid component exchange while maintaining precise alignment between interconnected elements. The ability to remove and replace individual lifting units 104 simplifies maintenance operations by allowing targeted component service without complete system disassembly. The capacity for adding supplementary lifting units 104 enables system expansion to accommodate increased throughput requirements or extended sortation sequences. The reconfiguration capability supports optimization of the lifting unit 104 arrangement based on specific application requirements, parcel characteristics, or operational constraints, maximizing system versatility across diverse implementation scenarios. The standardized interfaces incorporate precision alignment features that ensure proper positioning of each lifting unit 104 relative to the central support frame 118 and adjacent units 104, maintaining operational clearances while optimizing space utilization.

The proposed modular configuration allows adaptation of the mobile robotic system 100 to varying operational requirements through modification of the number and arrangement of lifting units 104. The mounting system includes standardized mechanical interfaces between the lifting units 104 and the central support frame 118, facilitating rapid reconfiguration while maintaining system stability. The modular mounting system may utilize quick-release mechanisms that facilitate rapid component exchange without specialized tools, minimizing system downtime during reconfiguration or maintenance operations. The standardized mounting architecture supports interchangeability of lifting units 104 across different positions within the system, enabling flexible configuration adjustments based on specific operational requirements or sortation patterns. The modular approach enhances the adaptability of the mobile robotic system 100 to changing operational requirements, extending system utility across diverse application environments while reducing lifecycle costs through simplified maintenance and upgrade pathways.

In an example implementation, the AGV 102 is configured to execute controlled rotational movements about a central vertical axis for facilitating accurate positioning during parcel reception and discharge operations. This rotational capability represents an aspect of the AGV 102 positioning functionality, enabling precise alignment with both pickup and delivery points throughout operational cycles. The rotation about a central vertical axis provides efficient directional adjustment without requiring complex translational movements, optimizing positioning operations while minimizing space requirements. This rotational capability enables the mobile robotic system 100 to align specific lifting units 104 with external material handling interfaces, such as conveyors, chutes, or stationary bins, through controlled angular positioning of the AGV 102. The rotational mechanism is designed to provide smooth and precise angular adjustments while maintaining stable support for the mounted lifting units 104 and their contents, ensuring reliable operation throughout positioning sequences. The rotational capability enhances the versatility of the mobile robotic system 100 by enabling it to interact with various fixed material handling systems or discharge locations within the facility environment, facilitating seamless integration with existing operational infrastructure while maintaining the flexibility of mobile operations for complex sortation requirements.

This rotational capability enables the mobile robotic system 100 to align specific lifting units 104 with external material handling interfaces, such as conveyors, chutes, or other parcel transfer mechanisms, through controlled angular displacement of the AGV 102. The mobile robotic system 100 maintains precise spatial relationships between components during rotational operations through integrated mechanical and control systems. Herein, the central support frame 118 provides structural support for the lifting units 104 and motors 106 while the AGV 102 executes rotational movements. This design configuration enables the mobile robotic system 100 to maintain stable operation during both reception and discharge sequences while executing complex multi-parcel sortation patterns through coordinated rotation and actuation operations.

In present examples, the rotational mechanism may incorporate precision drive systems, including geared motors and position encoders, that enable accurate angular positioning with minimal overshoot or oscillation. The control algorithms governing rotational movements incorporate acceleration and deceleration profiles that optimize positioning speed while maintaining stability of the parcels positioned on the lifting units 104. The structural integration between the AGV 102 and the central support frame 118 ensures consistent alignment between the rotation centre and the lifting unit 104 arrangement, maintaining predictable spatial relationships throughout rotational operations. This rotational capability, combined with the independent actuation of specific lifting units 104, enables complex sortation patterns without requiring fixed infrastructure, enhancing operational flexibility while maintaining precise control over parcel discharge operations.

The mobile robotic system 100 further comprises a controller (not shown) configured to receive parcel data corresponding to multiple parcels, map each parcel to a specific lifting unit 104 of the plurality of independently actuatable lifting units 104 in a sequential order, generate a sortation sequence for the multiple parcels based on the sequential order, and control the at least one motor 106 to actuate specific lifting units 104 according to the sortation sequence. This control architecture represents a component of the mobile robotic system 100, providing the computational foundation for automated parcel handling and sortation operations. The controller integrates data processing capabilities with mechanical control functions, enabling coordinated operation of the overall system according to predetermined sortation requirements. The ability to receive and process parcel data enables the system to make informed decisions regarding parcel-to-lifting-unit mapping, establishing logical relationships between individual parcels and their assigned handling mechanisms. The sequential mapping functionality establishes an ordered relationship between multiple parcels, enabling structured processing according to operational requirements or delivery priorities. The generation of a sortation sequence based on this mapping creates an operational plan that guides subsequent system actions, including navigation of the AGV 102 and actuation of the lifting unit(s) 104. Specifically, the control over motor 106 actuation enables precise implementation of the generated sortation sequence, ensuring accurate parcel discharge at designated destination points according to the established plan.

For present purposes, the controller processes incoming parcel data to determine optimal unit assignments and discharge sequences, enabling efficient multi-parcel sortation operations through coordinated actuation of the lifting units 104. The controller may incorporate various computational elements, including processors, memory systems, and communication interfaces, that enable real-time data processing and system control functions. The parcel data received by the controller may include various attributes, such as destination information, handling requirements, dimensional characteristics, and processing priorities, enabling decision-making regarding parcel management operations. In the present implementations, the mapping function establishes logical relationships between individual parcels and specific lifting units 104 based on various factors, including parcel destination, lifting unit 104 position, and system configuration, optimizing discharge efficiency while maintaining accurate sortation. The sortation sequence generation incorporates multiple factors, including destination proximity, operational efficiency, and discharge timing, to create an optimized actuation plan that minimizes travel distance and operational time while ensuring accurate parcel sortation. The implementation of this intelligent control functionality enhances the operational capabilities of the mobile robotic system 100, enabling complex sortation operations without requiring fixed infrastructure or manual intervention during processing sequences.

The controller is further configured to autonomously navigate the AGV 102 between at least one pickup location for receiving one or more parcels on selected one or more lifting units 104 and at least one delivery location for discharging one or more parcels through selective actuation of one or more lifting units 104. This autonomous navigation capability enables the mobile robotic system 100 to complete material handling sequences without manual intervention. The controller integrates navigational planning with parcel handling operations, generating operational sequences that encompass movement between functional locations as well as specific parcel manipulation activities. The navigation between pickup locations enables systematic parcel acquisition according to predetermined loading sequences, with the AGV 102 positioning itself precisely to receive parcels on designated lifting units 104. The subsequent navigation to delivery locations establishes the spatial context for discharge operations, with the AGV 102 positioning itself to enable accurate parcel delivery to specified destination points through selective actuation of appropriate lifting units 104. This integrated approach to navigation and actuation ensures coordinated system operation throughout complete material handling cycles, from initial parcel reception through final discharge at designated destinations.

Such automated control enables the mobile robotic system 100 to execute complete material handling sequences, from initial parcel acquisition through final sortation and delivery, while maintaining accurate positioning and navigation throughout operational cycles. The autonomous navigation functionality may incorporate various sensing technologies, including optical systems, laser-based range finders, and inertial measurement units, that enable real-time environmental awareness and position determination. The navigation algorithms process sensor data to determine optimal travel paths between operational locations, considering factors such as obstacle avoidance, traffic management, and energy efficiency. The integration of positioning control with actuation of the lifting unit 104 enables synchronized operations, such that the AGV 102 achieves precise alignment with discharge targets before initiating the actuation sequence for the appropriate lifting unit 104. This coordinated approach ensures accurate parcel delivery while minimizing operational delays, enhancing overall system efficiency across complex sortation scenarios. The autonomous navigation capability supports dynamic adaptation to changing facility conditions or processing requirements, enabling the mobile robotic system 100 to maintain operational efficiency across diverse implementation environments.

The controller is further configured to verify successful parcel discharge through position monitoring of each lifting unit 104, maintain a mapping system associating parcels with specific lifting units 104 and intended destination points, and generate status updates indicating completion of parcel sortation operations. This monitoring and verification functionality ensures operational reliability by confirming successful execution of discharge operations while maintaining accurate system status information. The position monitoring capability tracks the angular displacement of each lifting unit 104 during actuation sequences, enabling confirmation of complete discharge cycles and detection of potential actuation anomalies. The mapping system establishes a logical framework that tracks relationships between parcels, lifting units 104, and destinations throughout operational cycles, ensuring consistent system awareness of sortation status and requirements. The generation of status updates provides operational transparency and accountability, enabling integration with broader warehouse management systems and facilitating performance tracking across multiple sortation cycles. This integrated approach to operational monitoring and verification enhances system reliability while providing valuable data for process optimization and performance analysis. The verification functionality ensures that the mobile robotic system 100 maintains accurate tracking of parcel status throughout the sortation process, enabling reliable operation even across complex multi-parcel handling sequences with diverse destination requirements.

Further, the controller of the mobile robotic system 100 executes monitoring and control functions to manage parcel sortation operations. The controller implements continuous position monitoring of each lifting unit 104 through integrated angular position sensors, enabling real-time tracking of lifting unit 104 orientations during discharge sequences. The controller may implement a mapping system that defines relationships between incoming parcels, assigned lifting units 104, and designated destination points. This mapping system enables the controller to execute sortation sequences by coordinating the actuation of specific lifting units 104 at predetermined discharge locations. The controller is also configured to coordinate positioning of the AGV 102 with actuation of the motor 106 to ensure accurate parcel delivery. In the present implementations, the controller generates and maintains sequential status updates for all active sortation operations. These updates track the status of each parcel from initial loading onto a designated lifting unit 104 through final discharge at the intended destination point. The position monitoring functionality may utilize various sensing technologies, including rotary encoders, potentiometers, or optical sensors, that provide accurate angular position data for each lifting unit 104 during both transport and actuation operations. The mapping system establishes data relationships that associate specific parcels with their assigned lifting units 104 and destination points, creating a comprehensive logical framework that guides subsequent sortation operations. The coordination between positioning of the AGV 102 and actuation of the lifting unit 104 ensures proper spatial alignment between discharge mechanisms and destination targets, enhancing delivery accuracy while minimizing the potential for operational errors. Further, the status update generation provides valuable operational data that can be integrated with broader warehouse management systems, enabling comprehensive tracking and analysis of sortation performance across multiple operational cycles.

More specifically, for parcel reception operations, the controller determines the designated lifting unit 104 for each incoming parcel based on the generated sortation sequence. The AGV 102 then executes a controlled rotation to position the designated lifting unit 104 beneath the parcel transfer point. The controller maintains the lifting unit 104 in a horizontal orientation during reception to ensure stable parcel placement on the parcel receiving surface 114. This alignment capability enables the mobile robotic system 100 to execute sequential loading operations across multiple lifting units 104 while maintaining predefined parcel-to-unit mapping sequences. Further, for parcel discharge operations, the controller coordinates multiple mechanical actions to ensure accurate delivery. Initially, the AGV 102 rotates to align the designated lifting unit 104 with the target discharge location. Upon achieving proper alignment, the corresponding motor 106 actuates the lifting unit 104 through a defined angular displacement, inducing controlled parcel discharge. The controller monitors the angular position of the lifting unit 104 throughout the discharge sequence to verify successful operation completion. The controlled rotation capability of the AGV 102 enables precise alignment with both reception and discharge points, facilitating accurate parcel transfer operations throughout the sortation process. During reception operations, the maintenance of horizontal orientation for the designated lifting unit 104 ensures stable parcel placement, minimizing the risk of displacement during subsequent transport operations. For discharge operations, the coordination between AGV 102 positioning and lifting unit 104 actuation represents a sophisticated control sequence that ensures accurate parcel delivery to designated destination points. The monitoring of angular position throughout the discharge sequence enables verification of successful operation completion, with the controller capable of detecting and responding to potential actuation anomalies that could affect discharge reliability.

The mobile robotic system 100 of the present disclosure provides advantages through its integrated mechanical architecture that enables simultaneous handling and sortation of multiple parcels. The configuration of independently actuatable lifting units 104 mounted on the AGV 102, combined with individual motors 106 for each lifting unit 104, enables precise control over parcel discharge operations. The central support frame 118 provides a stable mounting structure that maintains alignment between mechanical components during both AGV 102 movement and lifting unit 104 actuation, ensuring accurate parcel handling across operational sequences. The modular design enables reconfiguration of lifting unit 104 arrangements and quantities to accommodate varying operational requirements, while the parallel unit configuration with defined spacing prevents mechanical interference during actuation. The mobile robotic system 100 can execute complex sortation patterns through coordinated rotation and discharge operations, eliminating the need for fixed infrastructure while maintaining accurate parcel delivery to designated destinations. This mechanical integration, combined with the controller-coordinated operation of the AGV 102 and the lifting units 104, enables the mobile robotic system 100 to achieve efficient material handling in diverse facility environments while maintaining control over individual parcel sortation sequences.

The mobile robotic system 100 of the present disclosure integrates mobility, sensing, and actuation technologies to enable efficient and precise parcel management across various operational scenarios. The mobile robotic system 100 implements mechanical configurations and control architectures to achieve enhanced throughput capabilities while maintaining operational flexibility and adaptability to diverse facility requirements. The integration of these technologies creates a unified system capable of executing complex material handling operations without requiring fixed infrastructure, enhancing deployment flexibility while reducing implementation costs. The sensing technologies incorporated within the system provide environmental awareness and positioning capabilities that enable precise navigation and alignment during operations. The actuation technologies deliver controlled mechanical movement for both navigation and parcel discharge functions, with their operation coordinated through integrated control systems that ensure synchronized performance across multiple subsystems. This technological integration enables the mobile robotic system 100 to provide material handling capabilities with minimal facility modifications, enhancing operational flexibility while supporting diverse sortation requirements.

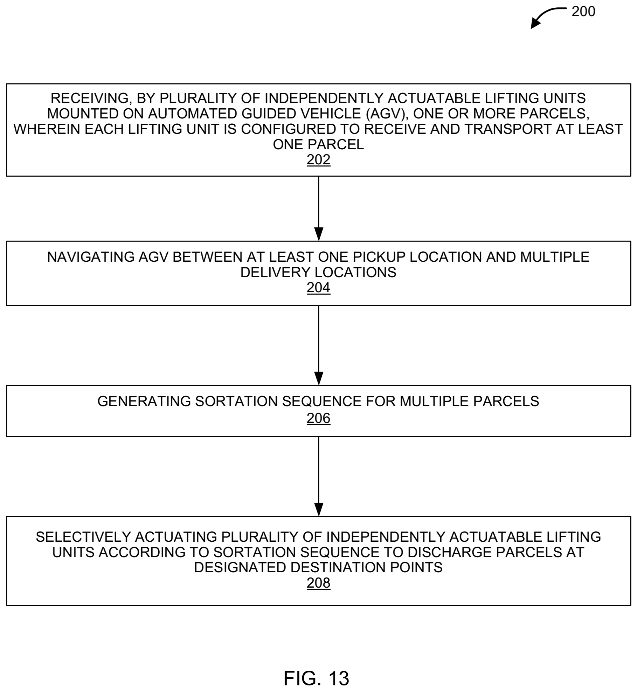

Referring now to FIG. 13, illustrated is a flowchart depicting a method 200 for autonomous parcel handling and sortation using the mobile robotic system 100, in accordance with one or more exemplary embodiments of the present disclosure. The method 200 establishes a procedural framework for executing automated parcel sortation operations using the mobile robotic system 100 of the present disclosure. The method 200 integrates various functional steps that collectively enable complete material handling cycles, from initial parcel reception through final discharge at designated destination points. The structured approach defined by the method 200 ensures consistent operational execution while supporting adaptation to diverse sortation requirements and application environments. The method 200 provides a systematic implementation pathway for the technical capabilities embodied in the mobile robotic system 100, establishing operational protocols that optimize system performance while maintaining reliable parcel handling across various sortation scenarios.

At step 202, the method 200 involves receiving, by a plurality of independently actuatable lifting units 104 mounted on an automated guided vehicle (AGV) 102, one or more parcels, wherein each lifting unit 104 is configured to receive and transport at least one parcel. This step initiates the operational sequence by loading parcels onto the mobile robotic system 100 for subsequent processing. The reception step may involve various mechanisms for transferring parcels onto the designated lifting units 104, including direct placement by automated equipment, manual loading by operators, or transfer from other material handling systems such as conveyors or chutes. The receiving operation establishes the initial state for the subsequent sortation process by positioning specific parcels on designated lifting units 104 according to predetermined loading patterns or sequences. The parcel reception step incorporates precise positioning of the AGV 102 to align designated lifting units 104 with parcel transfer points, ensuring accurate placement on the receiving surfaces 114. The control system maintains lifting units 104 in their horizontal orientation during reception to provide stable platforms for parcel placement, minimizing the risk of displacement during subsequent transport operations. The reception process may incorporate verification mechanisms, such as weight sensors or optical systems, that confirm successful parcel placement before proceeding to subsequent operational steps. The strategic assignment of specific parcels to particular lifting units 104 establishes the foundation for the sortation sequence, with the initial parcel-to-unit mapping defining the logical relationships that guide subsequent discharge operations.

At step 204, the method 200 involves navigating the AGV 102 between at least one pickup location and multiple delivery locations. This navigation step enables the mobile robotic system 100 to transition between operational positions, including initial parcel reception points and various discharge destinations required for the sortation process. The navigation functionality incorporates environmental awareness capabilities that enable safe and efficient movement through the operational environment, with obstacle detection and avoidance functions preventing collisions with infrastructure or personnel. The navigational planning may optimize travel paths to minimize distance and time while ensuring complete coverage of all required delivery locations according to the sortation requirements of the loaded parcels. The navigation step integrates various technological elements, including localization systems, path planning algorithms, and motion control functions, that collectively enable precise positioning throughout operational cycles. The localization capabilities determine the AGV 102 current position within the operational environment, providing the reference framework for subsequent movement planning and execution. The path planning algorithms generate optimal travel routes between operational points, considering factors such as obstacle avoidance, traffic management, and energy efficiency. The motion control functions implement the planned paths through coordinated operation of the drive mechanisms 110 of the AGV 102, ensuring accurate positioning while maintaining stability of the parcels positioned on the lifting units 104. This integrated approach to navigation enables the mobile robotic system 100 to execute complex movement patterns between multiple operational locations while maintaining precise control over parcel positioning.

At step 206, the method 200 involves generating a sortation sequence for the multiple parcels. This step establishes the logical framework that guides subsequent discharge operations by defining the order and timing for actuating specific lifting units 104 at their designated destination points. The sortation sequence generation considers various factors, including destination proximity, operational efficiency, and processing priorities, to create an optimized actuation plan that maximizes sortation throughput while minimizing travel distance and operational time. The generated sequence serves as the operational blueprint for the subsequent discharge operations, ensuring coordinated system behaviour according to predetermined sortation requirements. The sortation sequence generation incorporates computational analysis of various operational parameters to determine the optimal actuation order for the loaded parcels. The analysis may consider spatial relationships between delivery destinations to minimize travel distance between consecutive discharge operations, enhancing operational efficiency while reducing cycle time. The sequencing may also incorporate priority considerations for specific parcels based on processing requirements or delivery deadlines, ensuring timely handling of time-sensitive items. The generated sequence establishes a comprehensive actuation plan that defines which lifting units 104 should be actuated at which locations, creating a structured operational roadmap that guides subsequent system actions throughout the sortation process.

At step 208, the method 200 involves selectively actuating the plurality of independently actuatable lifting units 104 according to the sortation sequence to discharge parcels at designated destination points. This step implements the generated sortation sequence through controlled mechanical operations, specifically targeting individual lifting units 104 for discharge operations at their assigned destinations. The selective actuation capability enables precise control over the discharge process, ensuring accurate parcel delivery to designated points while maintaining control over parcels assigned to subsequent destinations. The actuation operations may incorporate position verification to confirm successful discharge before proceeding to subsequent sortation tasks, ensuring reliable operation throughout the sortation process. The selective actuation step integrates positioning control with mechanical actuation to ensure accurate parcel delivery to designated destination points. The positioning control aligns specific lifting units 104 with their assigned discharge targets through controlled AGV 102 movement, establishing the proper spatial relationship for successful parcel transfer. The mechanical actuation initiates controlled angular displacement of the designated lifting unit 104, inducing gravitational movement of the parcel toward the intended destination point. The position monitoring tracks the angular displacement throughout the actuation sequence, enabling verification of complete discharge operations and detection of potential actuation anomalies. This integrated approach to selective actuation ensures accurate implementation of the generated sortation sequence while maintaining reliable parcel handling throughout the discharge process.

The method 200 further comprises mapping each parcel to a specific lifting unit 104 of the plurality of independently actuatable lifting units 104 in a sequential order, and controlling at least one motor 106 operatively coupled to the plurality of independently actuatable lifting units 104 to actuate specific lifting units 104 according to the sortation sequence. This mapping function establishes explicit relationships between individual parcels and specific lifting units 104, creating a logical framework that guides subsequent sortation operations. The sequential ordering within this mapping defines the operational relationships between multiple parcels, establishing a structured approach to their processing according to predetermined requirements or priorities. The subsequent control of motors 106 based on this mapping ensures accurate implementation of the established relationships, with specific lifting units 104 actuated at their designated locations according to the defined sequence. This coordinated approach to mapping and control ensures consistent operational execution while maintaining precise tracking of individual parcels throughout the sortation process. The mapping operation establishes a digital representation of the physical parcel arrangement within the mobile robotic system 100, enabling intelligent decision-making regarding discharge operations based on destination requirements and system configuration. The motor 106 control translates these digital decisions into precise mechanical actions that physically implement the sortation plan, creating a seamless integration between computational and mechanical aspects of the sortation process.

The method 200 further comprises rotating specific lifting units 104 through a predefined angular range to facilitate parcel discharge, and synchronizing the rotation of multiple lifting units 104 to prevent mechanical interference during actuation. The rotational actuation mechanism represents the fundamental principle for inducing controlled parcel discharge, with the angular displacement of the lifting unit 104 creating the gravitational assistance that guides parcel movement toward the intended destination. The predefined angular range is carefully calibrated to ensure reliable discharge across various parcel types while maintaining system stability throughout the actuation sequence. The synchronization between multiple lifting units 104 during concurrent or sequential actuation operations prevents mechanical collisions or interference that could compromise system reliability or discharge accuracy. This coordinated approach to rotational actuation ensures consistent operational performance while maintaining precise control over individual parcel discharge operations across diverse sortation scenarios. The rotational control operations incorporate specific displacement profiles that ensure reliable parcel transfer without excessive acceleration or movement that could damage parcels or affect delivery accuracy. The synchronization mechanisms coordinate the timing and sequence of multiple actuation operations to maintain system integrity while optimizing operational efficiency across complex discharge sequences.

The method 200 further comprises verifying successful parcel discharge through position monitoring of each lifting unit 104, maintaining a mapping system associating parcels with specific lifting units 104 and intended destination points, and generating status updates indicating completion of parcel sortation operations. This comprehensive verification and monitoring functionality ensures operational reliability by confirming successful execution of discharge operations while maintaining accurate system status information throughout the sortation process. The position monitoring capability tracks the angular displacement of each lifting unit 104 during actuation sequences, enabling confirmation of complete discharge cycles and detection of potential actuation anomalies that could affect discharge reliability. The mapping system maintenance establishes a persistent logical framework that tracks relationships between parcels, lifting units 104, and destinations throughout operational cycles, ensuring consistent system awareness of sortation status and requirements. The generation of status updates provides operational transparency and accountability, enabling integration with broader logistics management systems and facilitating performance tracking across multiple sortation cycles. This integrated approach to verification and monitoring enhances system reliability while providing valuable data for process optimization and performance analysis. The verification mechanisms ensure that the mobile robotic system 100 maintains accurate operational status awareness throughout complex multi-parcel sortation sequences, enhancing operational reliability while supporting integration with broader warehouse management systems.

The teachings of the present disclosure may be implemented in various forms, including as an AGV product, system, method, or computer program product. The mobile robotic system 100 described herein may be implemented through hardware components, software instructions executed by processors, or combinations thereof. Methods of operation corresponding to the described embodiments may be implemented through computer-executable instructions stored on non-transitory computer-readable media, with the instructions configured to control components of the mobile robotic system 100 to execute the described functions. The scope of the present disclosure encompasses all such implementations and variations that would be apparent to persons skilled in the relevant arts.

The hardware implementations may incorporate various computational and mechanical components configured to execute the operational functions described herein, including processors, memory systems, communication interfaces, sensors, actuators, and structural elements. The software implementations may include algorithms, data structures, and control logic that govern system behaviour and decision-making processes, enabling automated execution of the described operational functions. The computer program product implementations may package these software elements in deployable formats suitable for installation and execution on compatible hardware platforms, facilitating system implementation across diverse operational environments. This flexibility in implementation approaches enables adaptation of the disclosed technologies to various application requirements and operational constraints while maintaining the fundamental capabilities and advantages described herein.

The mobile robotic system 100 of the present disclosure provides significant technical advantages through its integrated mechanical architecture that enables simultaneous handling and sortation of multiple parcels. The configuration of independently actuatable tilt trays 104 mounted on the AGV 102 in a sequential arrangement, combined with individual tilt motors 106 for each tilt tray 104, enables precise control over parcel discharge operations. The central support frame 118 provides a stable mounting structure that maintains alignment between mechanical components during both AGV movement and tilt tray actuation, ensuring accurate parcel handling across operational sequences. The modular design enables reconfiguration of tilt tray arrangements and quantities to accommodate varying operational requirements, while the parallel tray configuration with defined spacing prevents mechanical interference during actuation. The mobile robotic system 100 can execute complex sortation patterns through coordinated rotation and discharge operations, eliminating the need for fixed infrastructure while maintaining accurate parcel delivery to designated destinations. This mechanical integration, combined with the controller-coordinated operation of the AGV 102 and the tilt trays 104, enables the mobile robotic system 100 to achieve efficient material handling in diverse facility environments while maintaining control over individual parcel sortation sequences.

The mobile robotic system of the present disclosure integrates mobility, sensing, and actuation technologies to enable efficient and precise parcel management across various operational scenarios. The mobile robotic system implements mechanical configurations and control architectures to achieve enhanced throughput capabilities while maintaining operational flexibility and adaptability to diverse facility requirements.

The foregoing descriptions of specific embodiments of the present disclosure have been presented for purposes of illustration and description. They are not intended to be exhaustive or to limit the present disclosure to the precise forms disclosed, and obviously many modifications and variations are possible in light of the above teaching. The exemplary embodiment was chosen and described in order to best explain the principles of the present disclosure and its practical application, to thereby enable others skilled in the art to best utilize the present disclosure and various embodiments with various modifications as are suited to the particular use contemplated.

## Claims

1. A mobile robotic system comprising:
an automated guided vehicle (AGV);
a plurality of independently actuatable lifting units mounted on the AGV, wherein each lifting unit of the plurality of independently actuatable lifting units is configured to receive and transport at least one parcel; and
at least one motor operatively coupled to the plurality of independently actuatable lifting units, wherein the at least one motor is configured to actuate the lifting units to facilitate parcel discharge,
wherein the plurality of independently actuatable lifting units are arranged to enable selective parcel discharge at designated destination points.

2. The mobile robotic system of claim 1, wherein the plurality of independently actuatable lifting units comprises a plurality of tilt trays, and wherein the at least one motor comprises a plurality of tilt motors, each tilt motor of the plurality of tilt motors being operatively coupled to a respective tilt tray of the plurality of tilt trays.

3. The mobile robotic system of claim 2, wherein each tilt motor is configured to rotate its respective tilt tray about an axis to facilitate parcel discharge.

4. The mobile robotic system of claim 2, wherein the plurality of tilt trays comprises at least two tilt trays arranged in a sequential arrangement, wherein each tilt tray is configured to receive a parcel at a single pickup location or at multiple pickup locations.

5. The mobile robotic system of claim 4, wherein each tilt tray is independently actuatable to discharge its respective parcel at a designated destination point.

6. The mobile robotic system of claim 2, wherein each tilt tray of the plurality of tilt trays comprises:
a support platform defining a parcel receiving surface;
at least two mounting brackets positioned on opposing sides of the support platform;
a rotatable shaft coupled to the mounting brackets and defining an axis of rotation; and
a mechanical coupling between the rotatable shaft and the respective tilt motor.

7. The mobile robotic system of claim 1, further comprising a central support frame mounted on the AGV, wherein:
the plurality of independently actuatable lifting units are mounted to the central support frame; and
the central support frame includes motor mounting points for securing the at least one motor..

8. The mobile robotic system of claim 1, further comprising a modular mounting system enabling:
removal and replacement of individual lifting units;
addition of supplementary lifting units; and
reconfiguration of lifting unit positions.

9. The mobile robotic system of claim 1, wherein:
the plurality of independently actuatable lifting units are arranged in a parallel configuration on the AGV;
each lifting unit is dimensioned to accommodate different parcel sizes; and
adjacent lifting units maintain sufficient spacing to prevent interference during independent actuation.

10. The mobile robotic system of claim 2, wherein:
each tilt motor is configured to rotate its respective tilt tray through a predefined angular range to facilitate parcel discharge; and
the plurality of tilt motors are synchronized to prevent mechanical interference between adjacent tilt trays during actuation.

11. The mobile robotic system of claim 1, further comprising a controller configured to:
receive parcel data corresponding to multiple parcels;
map each parcel to a specific lifting unit of the plurality of independently actuatable lifting units in a sequential order;
generate a sortation sequence for the multiple parcels based on the sequential order; and
control the at least one motor to actuate specific lifting units according to the sortation sequence.

12. The mobile robotic system of claim 11, wherein the controller is further configured to autonomously navigate the AGV between:
at least one pickup location for receiving one or more parcels on selected one or more lifting units; and
at least one delivery location for discharging one or more parcels through selective actuation of one or more lifting units.

13. The mobile robotic system of claim 11, wherein the controller is further configured to:
verify successful parcel discharge through position monitoring of each lifting unit;
maintain a mapping system associating parcels with specific lifting units and intended destination points; and
generate status updates indicating completion of parcel sortation operations.

14. The mobile robotic system of claim 1, wherein the plurality of independently actuatable lifting units comprises at least one of: tilt trays; conveyors; vacuum-based picking grippers; rotatable platforms; sliding mechanisms; multi-segment articulated platforms; belt-driven discharge surfaces; or pneumatically actuated discharge mechanisms.

15. A method for autonomous handling and sortation of parcels, the method comprising:
receiving, by a plurality of independently actuatable lifting units mounted on an automated guided vehicle (AGV), one or more parcels, wherein each lifting unit is configured to receive and transport at least one parcel;
navigating the AGV between at least one pickup location and multiple delivery locations;
generating a sortation sequence for the multiple parcels; and
selectively actuating the plurality of independently actuatable lifting units according to the sortation sequence to discharge parcels at designated destination points.

16. The method of claim 15, further comprising:
mapping each parcel to a specific lifting unit of the plurality of independently actuatable lifting units in a sequential order; and
controlling at least one motor operatively coupled to the plurality of independently actuatable lifting units to actuate specific lifting units according to the sortation sequence.

17. The method of claim 15, further comprising:
rotating specific lifting units through a predefined angular range to facilitate parcel discharge; and
synchronizing the rotation of multiple lifting units to prevent mechanical interference during actuation.

18. The method of claim 15, further comprising:
verifying successful parcel discharge through position monitoring of each lifting unit;
maintaining a mapping system associating parcels with specific lifting units and intended destination points; and
generating status updates indicating completion of parcel sortation operations.
